# EUROPÄISCHE PATENTSCHRIFT

(11) **EP 4 090 507 B1**
(45) Veröffentlichungstag und Bekanntmachung des Hinweises auf die Patenterteilung: **10.07.2024**
(21) Anmeldenummer: 21702170.8
(22) Anmeldetag: 15.01.2021
(51) Int. Cl.: B27N 3/02, B27N 3/00, B27N 3/14, B27N 1/00, B32B 5/16, B32B 5/30, B32B 7/12

(54) **OSB-PLATTE MIT DECKSCHICHT AUS TYPHA-BLATTMATERIAL**
OSB BOARD WITH A COVER LAYER MADE FROM TYPHA LEAF MATERIAL
PANNEAU OSB POURVU D'UNE COUCHE DE RECOUVREMENT EN MATÉRIAU À BASE DE FEUILLES DE TYPHA

(30) Priorität: 16.01.2020 DE 102020200498
(43) Veröffentlichungstag der Anmeldung: 23.11.2022
(73) Patentinhaber: Theuerkorn, Werner, 84389 Postmünster (DE)
(72) Erfinder: Theuerkorn, Werner, 84389 Postmünster (DE)
(74) Vertreter: Hoefer & Partner Patentanwälte mbB
(86) Internationale Anmeldenummer: PCT/EP2021/050807
(87) Internationale Veröffentlichungsnummer: WO 2021/144421

(56) Entgegenhaltungen:
- AT-B1- 513 506
- DE-A1- 102012 219 060
- DE-A1- 19 757 418

## Beschreibung

Die vorliegende Erfindung betrifft allgemein eine Platte, insbesondere OSB-Platte, umfassend zwei Deckschichten sowie mindestens eine dazwischenliegende Kernschicht, wobei eine oder beide Deckschichten aus Deckschichtpartikeln gebildet werden, die aus Typha-Blattmasse bestehen. Insbesondere betrifft die Erfindung solche Platten, bei denen Deckschichtpartikel aus Typha-Blattmasse mit einer Länge von 3 - 15 cm, insbesondere 7 - 10 cm, und Querschnitten von 2x2 mm bis 6 × 8 mm, vorzugsweise 3x3 mm, eingesetzt werden. Ein weiterer Aspekt der Erfindung ist ein Verfahren zur Herstellung einer solchen Platte.

### Hintergrund der Erfindung

OSB-Platten haben sich in den letzten Jahrzehnten auf dem Markt der biegesteifen, aussteifenden Plattenmaterialien aus Holzspanpartikeln zur Beplankung verschiedenster Konstruktionen weitgehend durchgesetzt. OSB ist die Abkürzung für die englische Bezeichnung "oriented strand board", was frei mit "ausgerichtete Großpartikel-Platten" übersetzt werden kann. Die dafür verwendeten Partikel bestehen in der Regel aus Holz verschiedenster Art, meist aber aus Nadelholz und sind im Gegensatz zum verwendeten Material der Spanplattenherstellung ausreichend groß, damit die statischen Eigenschaften von Holz im Plattenmaterial wirksam werden.

Das wesentliche technische Problem bei der Fügung dieser "strands" besteht darin, die Oberflächen der unregelmäßig gerissenen Holzstückchen einander soweit anzunähern, dass sich dabei mit einer vertretbaren Menge an Kleber die Plattenoberflächen weitgehend schließen und ebnen. Dies geschieht durch die Anwendung hoher Drücke, die auf die Partikel einwirken. Die Folge notwendiger hoher Drücke ist, dass die Verklebung der einzelnen "strands" nur mit solch hochwirksamen Kunstharzklebern geschehen kann, die den ebenfalls hohen Rückstellkräften der Partikel standhalten können.

Bedingt durch diese Material- und Herstellungskennzeichen entsteht ein Plattenmaterial mit vielen gewünschten Eigenschaften, wie hohe Biegesteifigkeit und Aussteifungswirkung, die im modernen Holzbau entscheidend sind. Allerdings haben diese Materialien auch Eigenschaften, die nicht oder nicht in jedem Anwendungsbereich gewünscht sind.

So ist z.B. der Energieaufwand bei der Herstellung sehr hoch. Das betrifft sowohl die Erzeugung der Chips sowie die hohen Drücke beim Pressvorgang und den Energiegehalt der synthetischen Kleber.

Mit diesem verbindet sich eine weitere unerwünschte Eigenschaft des OSB-Materials. Es ist nicht kompostierbar und kann nur über das Verbrennen in den Stoffkreislauf rückgeführt werden, da jedes Partikel rundum mit Klebstoff eingehüllt ist und damit das Produkt für die Lebensdauer des Kunstharzes dem "normalen" Verrottungsprozess entzogen ist. Mit den Kunstharzklebern ist auch eine weitere negative Konnotation verbunden, die in der Entwicklung des modernen Holzbaus als Mehrgeschossbau, mittlerweile bis hin zum Hochhausbereich, zunehmend relevant wird: der Brandschutz. Anders als viele mineralische Bindemittel, die Wasser abspalten können, sind Kunstharzkleber nicht in der Lage das Brandverhalten des so gebundenen Materials positiv zu beeinflussen. Einige dieser Harze verschlechtern sogar diese Eigenschaft wegen ihrer Brennbarkeit. Eine weitere Schwierigkeit bei der Verklebung mit Kunstharzen sind die gesundheitsgefährlichen Emissionen bei der Produktion und /oder die des fertigen Produktes. Bei der Verklebung von OSB Platten aus Kiefernholzchips kommen die Terpen-Emissionen aus dem Holz selbst noch hinzu.

Ein weiteres Problemfeld der OSB-Platte betrifft ihren natürlichen Rohstoff Nadelholz: Mit zunehmender Ausbreitung des Holzbaus auch in der Mehrgeschossigkeit werden die Ressourcen hierfür knapper, der Rohstoff damit teurer. Es wäre viel sinnvoller, Nadelholz nur dort einzusetzen, wo es aufgrund seiner statischen Belastbarkeit und anderer nicht ersetzbarer Eigenschaften unentbehrlich ist. Die konventionelle OSB-Platte eignet sich wegen ihrer hohen Diffusionsdichtigkeit gut als Innenbeplankung von Holzständer- und Rahmenkonstruktionen, deren Gefache mit geflocktem Dämmmaterial gefüllt werden und durch die Diffusionsdichtigkeit die Dämmung vor Durchfeuchtung geschützt wird. Nach außen hin ist diese Eigenschaft jedoch unerwünscht, da es so die Entfeuchtung der Wandkernschicht verhindert. Hier wäre ein diffusionsoffeneres Plattenmaterial mit ähnlichen statischen Eigenschaften von Vorteil.

Die DE 197 57 418 A1 offenbart eine Dämmplatte umfassend zwei Deckschichten sowie mindestens eine dazwischenliegende Kernschicht, wobei beide Deckschichten aus Deckschichtpartikeln gebildet werden, die aus Typha-Blattmasse bestehen und eine Breite von etwa 2,5 mm sowie eine Länge von etwa 10 cm der Deckschichtpartikel aufweisen.

Es besteht daher ein hoher Bedarf an Platten, insbesondere OSB-Platten, die die vorliegenden Nachteile des Standes der Technik vermeiden und vorteilhafte, ökologisch verträgliche, diffusionsoffenere und in Ihren statischen und mechanischen Eigenschaften hochwertige Platten, insbesondere OSB-Platten bereit zu stellen.

Diese Aufgabe wird durch die beigefügten Ansprüche gelöst.

### Beschreibung der Erfindung

Ein erster Aspekt gemäß Anspruch 1 betrifft dabei Platte, insbesondere OSB-Platte, umfassend zwei Deckschichten sowie mindestens eine dazwischenliegende Kernschicht, wobei eine oder beide Deckschichten aus Deckschichtpartikeln gebildet werden, die aus Typha-Blattmasse bestehen, und wobei Deckschichtpartikel mit einer Länge von 3 - 15 cm, insbesondere 7 - 10 cm, und Querschnitten von 2 × 2 mm bis 6 × 8 mm, vorzugsweise 3 × 3 mm, eingesetzt werden, und wobei die mindestens eine Kernschicht
i) aus Holzspänen besteht oder diese enthält, oder
ii) oder aus Typha-Blattmaterial besteht oder dieses enthält, wobei die verwendeten Typha-Blattmaterialien aus Blättern oder Blattbündeln bestehen, die in Richtung der Blattachse in Scheiben von 1 - 5 mm, vorzugsweise 2 - 3 mm geschnitten sind. Nach einer bevorzugten erfindungsgemäßen Ausführungsform weisen die Deckschichtpartikel einen Querschnitt mit einer Breite von 2 bis 4 mm, insbesondere etwa 3 mm, und eine Höhe von 2 bis 5 mm, insbesondere etwa 3 mm auf. Nach einer bevorzugten erfindungsgemäßen Ausführungsform werden beide Deckschichten aus den vorstehend definierten Deckschichtpartikeln erzeugt.

Nach einer bevorzugten erfindungsgemäßen Ausführungsform sind die Deckschichten und die mindestens eine Kernschicht mit einem mineralischen Bindemittel, insbesondere einem magnesithaltigen Bindemittel (Magnesit bzw. Magnesiabinder) verklebt. Dem Bindemittel können organische, möglichst biologisch abbaubare Bindemittel zur Erhöhung von Festigkeitseigenschaften beigefügt sein.

Ein weiterer Aspekt der vorliegenden Erfindung betrifft ein Verfahren zur Herstellung einer Platte gemäß Anspruch 7, umfassend die folgenden Schritte:
a) Bereitstellen von Deckschichtpartikeln aus Typha-Blattmasse, wobei Deckschichtpartikel mit einer Länge von 3 - 15 cm, insbesondere 7 - 10 cm, und Querschnitten von 2 × 2 mm bis 6 × 8 mm, vorzugsweise 3 × 3 mm, eingesetzt werden;
b) Ausstreuen der die untere Deckschicht bildenden Deckschichtpartikel gemäß Schritt a);
c) optional Kämmen der gestreuten unteren Deckschicht, um die Deckschichtpartikel zumindest teilweise parallel auszurichten;
d) Aufstreuen der die mindestens eine Kernschicht bildenden Holzspäne und/oder Typha-Blattmaterialien;
e) Aufstreuen der die obere Deckschicht bildenden Deckschichtpartikel gemäß Schritt a);
f) optional Kämmen zur zumindest teilweise parallelen Ausrichtung der Deckschichtpartikel;
g) Verpressen der Deckschichten und mindestens eine Kernschicht mit Drücken von 0,5 - 5 N/mm², bevorzugt 1 - 2 N/mm².

Nach einer bevorzugten erfindungsgemäßen Ausführungsform werden die die Deckschichten und/oder die mindestens eine Kernschicht vor dem Ausstreuen mit einem mineralischen Bindemittel, insbesondere einem magnesithaltigen Bindemittel (Magnesit bzw. Magnesiabinder) versehen, insbesondere besprüht.

Nach einer bevorzugten Ausführungsform des erfindungsgemäßen Verfahrens wird eine Kernschicht verwendet, die aus Typha-Blattpartikeln besteht oder diese enthält, die in Richtung ihrer Blattachsen in dünne Scheiben von 1 - 5 mm, vorzugsweise 2 - 3 mm geschnitten wurden.

Nach einer bevorzugten Ausführungsform des erfindungsgemäßen Verfahrens werden eine oder beide der Deckschichten in Stärken von 1 - 10 cm, insbesondere in Stärken von 3 - 5 cm gestreut. Bevorzugt wird die Kernschicht in einer Stärke von 1-8 cm, insbesondere 2-4 cm gestreut.

Nach einer bevorzugten erfindungsgemäßen Ausführungsform besteht die mindestens eine Kernschicht aus Materialien, deren Druckfestigkeit über 1 N/mm² liegt und optional das Kernschichtmaterial kein Raumgewicht von mehr als 500 kg/m³ in gepresstem Zustand aufweist.

Nach einer bevorzugten Ausführungsform des erfindungsgemäßen Verfahrens wird eine kontinuierliche Anlage zur Herstellung der Platten verwendet und/oder die Platten unter Wasserdampfbeaufschlagung ausgehärtet.

Nach einer Ausführungsform des erfindungsgemäßen Verfahrens werden die einzelnen Schichten parallel und unabhängig voneinander gestreut und dann miteinander in einer Presse verpresst.

Im Rahmen der vorliegenden Erfindung wurde überraschend gefunden, dass sich Deckschicht-Partikel aus Typha-Material besonders gut für die Deckschichten von (Mehrschicht-)Platten, insbesondere OSB-Platten eignen. Dabei spielt offenbar der charakteristische Aufbau der

Blattmasse von Typha aus Kammern mit weichem Aerenchymgewebe und den harten Kammerzwischenwänden eine wesentliche Rolle.

Dadurch wird ein besonders vorteilhaftes Annähern und Verankern bzw. Verhaken der Oberflächen der unregelmäßig gerissenen Holzstückchen in der Kernschicht mit der Deckschicht ermöglicht. Die Plattenoberflächen lassen sich dadurch besonders vorteilhaft mit einer vertretbaren Menge an Kleber (Bindemittel) weitgehend schließen und ebnen.

Es wurde gefunden, dass diese Effekte besonders vorteilhaft sind, wenn Deckschichtpartikel mit einer Länge von 3 - 15 cm, insbesondere 7 - 10 cm, und Querschnitten von 2 × 2 mm bis 6 × 8 mm, vorzugsweise 3 × 3 mm, eingesetzt werden. Dadurch wird eine besonders effiziente Ausrichtung der Deckschichtpartikel bereits beim Ausstreuen der Deckschicht auf die Kernschicht ermöglicht, und nach dem Verpressen der Deckschicht auf die Kernschicht ein besonders gutes Annähern, Verbinden und Verhaken der Schichten erzielt. Gleichzeitig sind geringe Klebstoffmengen erforderlich. Dies ist auch vorteilhaft, weil die erzeugten Platten dadurch leichter sind.

Bevorzugt werden die Deckschichtpartikel aus Typha-Blattmasse längs der Blattachsen herausgespalten, so dass die längste Ausdehnung der Partikel parallel zu denen der Blattachsen verläuft. Ausgangsmaterial sind somit Rohrkolben-Blattbündel. Rohrkolben (botanischer Name Typha) mit ihren am häufigsten verbreiteten Arten Typha latifolia L. und Typha angustifolia L. sind in unserem Klima gut kultivierbare Wildpflanzen, die einen hohen Ertrag gewährleisten und einen umweltverträglichen Anbau ermöglichen.

Weiterhin wurde gefunden, dass die erfindungsgemäß als Deckschichtpartikel verwendeten Typha-Blattpartikel wesentlich geringere Rückstellkräfte aufweisen als das im Stand der Technik verwendeten Holzpartikel, wie z.B. Nadelholzpartikel. Dadurch ist eine Herstellung mit geringerem (Press-)Druck möglich. Auch wird der effiziente Einsatz eines ökologisch verträglichen mineralischen Klebers wie z.B. Zement oder Magnesit möglich. Gleichzeitig werden besonders glatte Deckschichtoberflächen erhalten.

Ein wesentlicher Aspekt betrifft die Ausgestaltung der Deckschichten, da sich an diese eine Reihe scheinbar widersprüchlicher Anforderungen richtet: Einerseits müssen sich die Partikel gut mit einer gestreuten, rauen und klüftigen Oberfläche verzahnen, um den gewünschten Effekt von Biege- und Querzugfestigkeit zu erzeugen. Andererseits müssen zu den Plattenoberflächen hin möglichst glatte Flächen erzielbar sein, auch wenn die Partikel in der Fläche regellos gestreut werden, um eine isotrope Eigenschaft zu erzeugen. Zusätzlich muss trotz dieser von beiden Deckschichtseiten her (Kernschicht- und Plattenoberflächenseite) so unterschiedliche Beanspruchung, die Zugfestigkeit dieser Deckschichten voll gewährleistet sein.

Es wurde gefunden, dass dieses komplexe Anforderungsprofil von Partikeln aus Typha-Blattmasse, wie hierin beschrieben und erfindungsgemäß verwendet, hervorragend erfüllt wird. Die charakteristische Struktur mit einer Mischung aus Schwammgewebe und dieses durchziehenden zug- und druckfesten Strängen ermöglicht die überraschend vorteilhafte Verwendung als Deckschichtpartikel für Platten in Rahmen der vorliegenden Erfindung.

Nach einer bevorzugten Ausführungsform sind die Partikel in einer oder insbesondere in beiden Deckschichten in der Fläche regellos gestreut, oder weisen zumindest keine einheitliche Ausrichtung ihrer Längsachsen auf. So sind nach dieser bevorzugten Ausführungsform die Partikel in der mindestens einen Deckschicht nicht alle mit ihrer jeweiligen Längsachse parallel zueinander ausgerichtet, vielmehr sind ihre jeweiligen Längsachsen unterschiedlich ausgerichtet. Das führt überraschend zu einer besonders guten Verzahnung mit der Kernschicht und vorteilhaften mechanischen Eigenschaften der erfindungsgemäßen Platte.

Für eine besonders vorteilhafte Verzahnung der Deckschicht(en) mit der Kernschicht und günstige mechanische Eigenschaften der erfindungsgemäßen Platte hat sich herausgestellt, dass die mindestens eine Kernschicht
i) aus Holzspänen besteht oder diese enthält, oder
ii) aus Typha-Blattmaterial besteht oder dieses enthält, wobei die verwendeten Typha-Blattmaterialien aus Blättern oder Blattbündeln bestehen, die in Richtung der Blattachse in Scheiben von 1 - 5 mm, vorzugsweise 2 - 3 mm geschnitten sind.

Die beiden erfindungsgemäßen Varianten i) und ii) ermöglichen eine besonders vorteilhafte Wechselwirkung und Verzahnung der Kernschicht mit einer Deckschicht wie hierin beschrieben, d.h. wobei die Deckschicht aus Deckschichtpartikeln gebildet wird, die aus Typha-Blattmasse besteht, und wobei Deckschichtpartikel mit einer Länge von 3 - 15 cm, insbesondere 7 - 10 cm, und Querschnitten von 2 × 2 mm bis 6 × 8 mm, vorzugsweise 3x3 mm, eingesetzt werden. Eine solche vorteilhafte Wechselwirkung und Verzahnung ist nicht möglich, wenn (wie bei einer herkömmlichen OSB-Platte) eine Kernschicht aus Holzspänen mit einer Deckschicht ebenfalls aus Holzspänen verwendet wird, oder z.B. die Deckschicht und Kernschicht aus erheblich anders dimensionierten Typha-Blattmasse-Partikeln bestehen als hierin erfindungsgemäß beschrieben.

Es wurde im Rahmen der vorliegenden Erfindung auch gefunden, dass eine Deckschicht wie hierin beschrieben, d.h. wobei die Deckschicht aus Deckschichtpartikeln gebildet wird, die aus Typha-Blattmasse besteht, und wobei Deckschichtpartikel mit einer Länge von 3 - 15 cm, insbesondere 7 - 10 cm, und Querschnitten von 2 × 2 mm bis 6 × 8 mm, vorzugsweise 3 × 3 mm, eingesetzt werden, die Einarbeitung eines gewünschten Profils (einer gewünschten Strukturierung) in die Oberfläche der Deckschicht (zur Außenseite der Platte hin), besonders vorteilhaft ermöglicht. Ein solches Profil besteht in der Regel aus einer oder mehreren definierten Vertiefungen oder Vorsprüngen auf der Oberfläche der Deckschicht, die z.B. ein regelmäßiges Muster über einen Teil oder die gesamte Oberfläche der Deckschicht (zur Außenseite der Platte hin) bildet. Die Vertiefungen oder Vorsprünge haben regelmäßig eine Höhe von etwa 0.1 bis 1 cm, insbesondere 0.15 bis 0.5 cm. Aufgrund der leichten Formbarkeit der verwendeten Deckschichtpartikel aus Typha-Blattmasse in der mindestens einen Deckschicht besteht die Möglichkeit, z.B. mit Hilfe von profilierten Pressformen oder Profil-Einlagen in die Pressformen, oder, bei kontinuierlichen Formprozessen, mit profilierten Andrückrollen der mindestens einen Deckschicht eine strukturierte Oberfläche zu geben. Diese strukturierte Oberfläche kann z.B. der besseren Putzhaftung oder bestimmten optischen Effekten dienen. Die Vorsprünge der strukturierten Oberfläche werden also nach dieser erfindungsgemäßen Ausführungsform nicht durch die Deckschichtpartikel (und deren Dimensionierung) erzeugt, und die Vertiefungen nicht durch "Lücken" zwischen den Deckschichtpartikeln. Vielmehr wird ein gewünschtes Profil gezielt durch die Verwendung einer entsprechend profilierten Pressform (z.B. Andrück-Rolle oder-Platte bzw. Einlage) erzeugt.

Die erfindungsgemäßen Platten sind vorzugsweise sogenannte OSB-Platten (auch als Grobspanplatten bezeichnet). Diese sind dem Fachmann geläufig.

Grobspanplatten werden in industriellen Anlagen wie beispielsweise folgt hergestellt:
Aus dem entrindeten Rundholz werden in Längsrichtung durch rotierende Messer die Späne (Strands) herausgeschnitten. Die natürliche Feuchtigkeit der Späne wird bei hohen Temperaturen reduziert. Dies ist notwendig, um die Späne danach mit ausreichend Bindemittel benetzen zu können. Außerdem darf während des Pressvorgangs nicht zu viel Feuchtigkeit in den Spänen vorhanden sein, da sonst der entstehende Dampfdruck die Rohplatte zum Platzen bringen könnte. Das Bindemittel wird in einer Beleimmaschine fein verteilt auf die Späne aufgebracht.

Die etwa 100-200 mm langen, 10-50 mm breiten und 0,6-1,5 mm dicken Späne werden im Wurfverfahren längs und quer orientiert so gestreut, dass sie kreuzweise in drei Schichten angeordnet werden.

Unter hohem Druck und hoher Temperatur (Pressentemperatur 200-250 °C) werden die Platten größtenteils auf kontinuierlichen Pressen hergestellt.

Zur Verklebung werden PF-Bindemittel (USA), MUPF-Bindemittel (Melamin-Harnstoff-Phenol-Formaldehyd) und PMDI-Bindemittel verwendet, wobei vor allem aus qualitativen Gründen der Anteil an PMDI überwiegt. Sehr häufig wird in der Mittelschicht PMDI eingesetzt und in den Deckschichten MUF- bzw. MUPF-Bindemittel.

Im Gegensatz dazu werden im Rahmen der vorliegenden Erfindung vorzugsweise mineralische Kleber verwendet.

Mineralische Kleber sind als solche aus dem Stand der Technik bekannt. Grundsätzlich können im Rahmen der vorliegenden Erfindung alle mineralischen Binder verwendet werden. Sie behindern nicht die Kompostierbarkeit, lassen keine Emissionen befürchten und weisen ähnlich positive Eigenschaften bezüglich Brandschutz auf. Mineralische Bindemittel sind meist mineralische Stoffe, die durch Kristallisation eine hohe Festigkeit erreichen. Man unterscheidet zwischen hydraulischen Bindemitteln, die sowohl an der Luft als auch unter Wasser erhärten z.B. Zement, hydraulischer Kalk, Putz und Mauermörtel. Nicht hydraulische Bindemittel hingegen nennt man auch Luftbindemittel, da sie nur an der Luft erhärten, wie z.B. Weisskalk, Gips, Magnesiabinder. Beispiel besonders geeigneter mineralischer Bindemittel (Kleber) sind: Magnesiabindemittel (Magnesit), Baugips, Anhydritbinder, Baukalk und Zement.

Zur Herstellung von Magnesiabinder werden die Rohstoffe Magnesit (MgCOs) und Dolomit (CaMg[CO₃]₂) verwendet. Das Rohmaterial wird zerkleinert und in der Regel bei Temperaturen zwischen 800 und 900 °C gebrannt. Beim Brennen setzt das Magnesit Teile als Kohlendioxid frei und es entsteht kaustische Magnesia. Die kaustische Magnesia ist mit Wasser reaktionsfähig. Die kaustische Magnesia wird mit Salzlösungen aus zweiwertigen Metallen zu einem Bindemittel gemischt. Magnesiabinder wurde früher auch Sorelzement genannt. Magnesiabinder wird in der Regel mit Magnesiumchloridlösung (MgCl₂) hergestellt, das als festes Salz oder wässrige Lösung gehandelt wird. Er kann jedoch auch mit verschiedenen anderen Salzlösungen, wie MgSO₄, CaCl₂ oder ZnCl₂, hergestellt werden.

Bei der Erhärtung bilden sich komplex zusammengesetzte basische Magnesiumsalze, wie Mg₂(OH)₃Cl·4H₂O. Es entsteht zunächst eine gallertartige Masse, aus der sich nach und nach nadelförmige Kristalle ausscheiden. Zudem bildet sich aus Mg(OH)₂ durch CO₂-Aufnahme aus der Luft - analog zur Erhärtung von Kalk - MgCOs. Das Mischungsverhältnis von wasserfreiem Magnesiumchlorid zu Magnesiumoxid sollte in der Regel zwischen 1:2 und 1:3,5 liegen.

Nach einer bevorzugten Ausführungsform wird Magnesit (Magnesiabinder) verwendet. Es wurde gefunden, dass dieser auch bei einem Masseanteil von ca. 50% (Trockengewicht Magnesiabinder bezogen auf das Gesamtgewicht der Schichtmaterialien) hervorragende Klebewirkung zeigt. Er ist weiterhin wenig empfindlich gegen Polyphenole (Gerbstoffe), wie sie in den Typha-Blattmaterialien zum Teil sehr stark vorkommen.

Nach einem Aspekt wird die erfindungsgemäße Platte, insbesondere die OSB-Platte, im Streuverfahren hergestellt. Das ermöglicht eine massentaugliche Produktion, wie bereits in der Spanplattentechnologie üblich.

Die Beleimung des Kern- und Deckschichtmaterials mit mineralischem Kleber, vorzugsweise Magnesit, kann batchweise in Freifallmischern, aber auch in kontinuierlich arbeitenden Anlagen geschehen. Diese sind dem Fachmann geläufig.

Nach einer Ausführungsform wird zuerst wird die untere Deckschicht gestreut.

Die Deckschichtpartikel aus Typha-Blattmasse sind stabförmig mit Längen von 3-15 cm, vorzugsweise 7-10 cm, und Querschnitten von 2x2 mm bis 6x8 mm, vorzugsweise 3x3 mm. Diese längs gerichtete Form bewirkt, dass die Partikel zwar regellos auf der späteren Plattenoberfläche zu liegen kommen aber dabei in etwa parallel zu dieser sind und die struktureigene Zugfestigkeit der Pflanze in Richtung der Blattachsen nutzen.

Diese Deckschicht, die nach einer bevorzugten Ausführungsform der Erfindung in Stärken von 1-10 cm gestreut wird, je nach gewünschter Plattenstärke und Stabilität, vorzugsweise in einer Stärke von 3-5 cm, kann durch "Kämmen" noch so modifiziert werden, dass die Längsachsen der Typha-Partikel mehr in die Richtung zeigen, in der eine spätere Zug- und Biegebeanspruchung zu erwarten ist.

Auf diese Deckschicht wird die Kernschicht aufgestreut. Sie kann aus verschiedenen Materialien bestehen, auch aus Mischungen dieser, deren Druckfestigkeit über 1 N/mm² liegt. Will man die Platten nicht zu schwer werden lassen, sollte das Kernschichtmaterial möglichst kein Raumgewicht >500 kg/ m³ im gepressten Zustand haben. Es können auch herkömmliche "Strands" (Späne) aus Holz verwendet werden. Dafür kommen beispielsweise Holzschnipsel aller Art in Frage, vorzugsweise solche, die sich für andere Werkstoffe wenig eignen, leicht sind, und in großen Mengen zur Verfügung stehen wie Pappel, Weide, Erle etc. Typischerweise können z.B. etwa 100-200 mm lange, 10-50 mm breite und 0,6-1,5 mm dicke Späne verwendet werden. Möglich wären hier aber auch druckfestere Reststoffe von Einjahrespflanzen wie Sonnenblumen, Mais etc. Die Kernschicht-Späne bzw. -Partikel können im Wurfverfahren gestreut werden.

Erfindungsgemäß wird als Kernschichtmaterial Typha-Blattmaterial wie in den Deckschichten, allerdings in veränderter Partikelform verwendet. Dabei nutzt man die spezielle Eigenschaft von Typha-Blattpartikeln, dass sie in Richtung ihrer Blattachsen ungleich druckstabiler sind als senkrecht dazu. Die Blätter oder Blattbündel werden hierbei in Richtung der Blattachsen gemessen in dünne Scheiben von 1-5 mm, vorzugsweise 2-3mm, geschnitten. Damit ist auch dieses Kernschichtmaterial streufähig und wird sich beim Streuvorgang tendenziell mit den jeweiligen Blattachsen senkrecht zur späteren Plattenoberfläche ausrichten. Es wurde überraschend gefunden, dass sich dadurch eine besonders gute Verzahnung der Deckschicht mit der darunterliegenden Kernschicht bereitstellen lässt.

Da Typha gegenüber Holz ca. 5-10-mal so leicht ist, lässt sich mit diesem Kernmaterial Gewicht sparen. Außerdem kann man Typha-Material verwenden, welches bei der Aufbereitung der Typha-Blattbündel zu Deckschichtmaterial abfällt. Das sind die aerenchymärmere Seitenware der Blätter und die Blattspitzen.

Vorzugsweise werden alle Kernschichtmaterialien sowie auch die Deckschichtmaterialien jeweils vor dem Streuvorgang im Sprühverfahren mineralisch, bevorzugt mit Magnesitschlämme (Magnesiabinder), beleimt.

Auf die Kernschicht wird analog zur unteren Deckschichtlage die obere Deckschicht aufgestreut. Die jeweiligen Streuvorgänge können auch parallel und unabhängig voneinander geschehen und dann miteinander der Presse zugeführt werden. In dieser werden die drei Schichten mit Drücken von 0,5-5 N/mm², bevorzugt 1-2 N/ mm², gepresst. Bei kontinuierlich arbeitenden Anlagen kann mit Wasserdampfbeaufschlagung in der Regel in ca. 2 Minuten ausgehärtet werden. Bei einfacheren, batchweisen Verfahren dauert die Aushärtung in der Form typischerweise ca. 1 Tag.

Nicht beansprucht wird eine Ausführungsform von Platten, insbesondere OSB-Platten, die neben einer oberen und einer unteren Deckschicht, und einer dazwischenliegenden Kernschicht auch noch ein oder mehrere weitere Schichten aufweist. Insbesondere können ein oder mehrere Zwischenschichten aus den gleichen Materialien wie vorstehend für die Kernschicht genannt, enthalten sein. Auch können eine oder beide Deckschicht oberflächenbehandelt sein, z.B. mit einer Imprägnierung oder einer Schutzschicht gegen Fäulnis, einer Farbschicht etc.

Die erfindungsgemäßen Platten, insbesondere die Verwendung der Deckschichten aus Typha-Partikeln wie hierin beschrieben, bevorzugt zusammen mit der Verwendung eines mineralischen Klebers (Bindemittels) ermöglichen es, in einem Plattenwerkstoff sehr unterschiedliche, gewünschte Eigenschaften zu vereinen:
1. Es können diverse Kernschichtmaterialien verwendet werden, die sich aus unterschiedlichen Anforderungen wie Kosten, Verfügbarkeit, Gewicht, Brandschutz dafür eignen.
2. Das Plattenmaterial kann energiearm hergestellt werden, da keine hohen Drücke notwendig sind und die Deckschichtpartikel mit scharfen Messern energiesparend geschnitten werden.
3. Das Plattenmaterial hat ausreichende statische Fähigkeiten, um im modernen Holzbau als Beplankung zu dienen.
4. Das Plattenmaterial ist wesentlich diffusionsoffener als herkömmliche OSB-Platten (z.B. bestimmbar mit Diffusionsmessungen gemäß DIN EN ISO 12572), und ist beispielsweise als Außenschale einer Beplankung hervorragend geeignet.
5. Gegenüber Kunstharz gebundenem Material hat die neue Typha-OSB-Platte höhere Brandsicherheit.
6. Das Produkt lässt sich problemlos in den Stoffkreislauf rückführen, weil der mineralische Kleber bei der Kompostierung inert ist. Durch die Verwendung eines mineralischen Binders (dessen Einsatz bei OSB-Platten erst durch die Verwendung der Typha-Blattmasse möglich wird) wird das natürliche Material nicht durch einen synthetischen Polymerbinder "vergiftet".
7. Das Material ist wegen seiner mineralischen Bindung und Saugfähigkeit direkt verputzbar.
8. Der Anbau von Typha bietet gegenüber von Nadelhölzern den ca. 5-fachen Ertrag und wird bei entsprechender Verbreitung die Materialkosten senken und die Umweltleistungen verbessern (Gewässerreinigung, Moorschutz, Retentionsräume, Erosionsschutz).
9. Anders als Holzspäne sind Typha- Blattpartikel mit einem offenzelligen Schwammgewebe ausgestattet. In dieses lassen sich auf einfache Weise, nass oder auch trocken mit fein gemahlenen pulverförmigen Stoffen, zusätzliche Brand- und Feuchteschutzmittel einlagern. Dadurch entstehen keine für die Verklebung ungünstigen Veränderungen der Partikeloberflächen.

Weitere Einzelheiten, Vorteile und Merkmale der vorliegenden Erfindung ergeben sich aus nachfolgender Beschreibung von Ausführungsbeispielen.

Alle Ausführungsformen und Merkmale, die hierin beschrieben sind, sind kombinierbar, es sei denn, es handelt sich um alternative Merkmale oder Ausführungsformen, wobei der Schutzumfang durch die beigefügten Ansprüche definiert ist.

Nach einer Ausführungsform zeichnet sich die Platte dadurch aus, dass mindestens eine Deckschicht eine profilierte Oberfläche zur Außenseite der Platte hin, insbesondere mit einer Vielzahl an Vertiefungen oder Vorsprüngen aufweist.

Nach einer Ausführungsform zeichnet sich das Verfahren dadurch aus, dass mindestens eine Deckschicht bei der Herstellung mit einer profilierten Oberfläche zur Außenseite der Platte hin versehen wird, insbesondere durch die Verwendung einer profilierten Pressform, einschließlich einer Andrück-Rolle, -Platte bzw. einer Einlage zu einer Pressform.

Die nachstehenden Ausführungsbeispiele dienen nur zur Veranschaulichung der Erfindung und soll diese nicht einschränken. Der Schutzumfang ergibt sich allein aus den Schutzansprüchen.

### Ausführungsbespiel 1:

Es wird zuerst wird die untere Deckschicht in einer Stärke von ca. 4 cm regellos gestreut. Die Deckschichtpartikel aus Typha-Blattmasse sind stabförmig mit einer Länge von etwa 8-9 cm, und Querschnitten von etwa 3x3 mm. Diese längs gerichtete Form bewirkt, dass die Partikel zwar regellos auf der späteren Plattenoberfläche zu liegen kommen aber dabei in etwa parallel zu dieser sind und die struktureigene Zugfestigkeit der Pflanze in Richtung der Blattachsen nutzen.

Auf diese Deckschicht wird die Kernschicht aufgestreut. Es werden herkömmliche "Strands" (Späne) aus Holz verwendet, mit etwa 100-150 mm Länge, 20-40 mm Breite und 0,8-1,2 mm Dicke.

Die Kernschichtmaterialien bzw. die Deckschichtmaterialien werden jeweils vor dem Streuvorgang im Sprühverfahren mineralisch, bevorzugt mit herkömmlicher Magnesitschlämme (Magnesiabinder), beleimt (Trocken-Gewichtsanteil des Magnesiabinders: ca. 30 - 60 Gew-%, insbesondere 40 - 55 Gew.-% bezogen auf die Gesamtmasse der Kernschicht- bzw. Deckschichtmaterialien).

Auf die Kernschicht wird analog zur unteren Deckschichtlage die obere Deckschicht in einer Stärke von ca. 4 cm regellos gestreut. Die Deckschichtpartikel aus Typha-Blatttmasse sind stabförmig mit einer Länge von etwa 8-9 cm, und Querschnitten von etwa 3x3 mm.

In einer Presse werden die drei Schichten mit einem Druck von 1,5 N/ mm² verpresst und das mineralische Bindemittel ausgehärtet (typischerweise ca. 1 Tag).

Die Platten weisen sehr glatte, ausgeglichene Oberflächen auf, sind deutlich leichter und diffusionsoffener (DIN EN ISO 12572) gegenüber einer herkömmlichen OSB-Platte gleicher Stärke aus Holzspänen mit synthetischen Klebern. Die Platten eignen sich hervorragend z.B. als Außenbeplankung mit hoher mechanischer Stabilität trotz geringem Gewicht, und sind einfach mit Brand- und Feuchteschutzmitteln zu imprägnieren, und aufgrund der Abwesenheit synthetischer Kleber ökologisch zu recyceln.

### Ausführungsbespiel 2:

Die Herstellung erfolgt analog zu Ausführungsbeispiel 1, wobei als Kernschichtmaterial Typha-Blattmaterial verwendet wird. Die Blätter oder Blattbündel werden hierzu in Richtung der Blattachsen gemessen in dünne Scheiben von etwa 3 mm, geschnitten. Das so erhaltene streufähige Kernschicht-Material richtet sich beim Streuvorgang tendenziell mit den jeweiligen Blattachsen senkrecht zur späteren Plattenoberfläche aus.

Da Typha gegenüber Holz ca. 5-10-mal so leicht ist, lässt sich mit diesem Kernmaterial bei sehr guten statischen und mechanischen Eigenschaften weiter Gewicht sparen. Es wird eine besonders vorteilhafte Diffusionsoffenheit (z.B. als Außenbeplankung) und eine einfache Einlagerung von Brand- und Feuchteschutzmitteln bereitgestellt, und die Platten sind (aufgrund der Abwesenheit synthetischer Kleber) einfach ökologisch zu recyceln.

## Patentansprüche

1. Platte, insbesondere OSB-Platte, umfassend zwei Deckschichten sowie mindestens eine dazwischenliegende Kernschicht, wobei eine oder beide Deckschichten aus Deckschichtpartikeln gebildet werden, die aus Typha-Blattmasse bestehen, und wobei Deckschichtpartikel mit einer Länge von 3 - 15 cm, insbesondere 7 - 10 cm, und Querschnitten von 2 × 2 mm bis 6 × 8 mm, vorzugsweise 3 × 3 mm, eingesetzt werden, und wobei die mindestens eine Kernschicht
i) aus Holzspänen besteht oder diese enthält, oder
ii) oder aus Typha-Blattmaterial besteht oder dieses enthält, wobei die verwendeten Typha-Blattmaterialien aus Blättern oder Blattbündeln bestehen, die in Richtung der Blattachse in Scheiben von 1 - 5 mm, vorzugsweise 2 - 3 mm geschnitten sind.

2. Platte nach Anspruch 1, **dadurch gekennzeichnet, dass** die Deckschichtpartikel eine Länge von 7 - 10 cm aufweisen.

3. Platte nach einem der vorstehenden Ansprüche, **dadurch gekennzeichnet, dass** die Deckschichtpartikel einen Querschnitt mit einer Breite von 2 bis 4, insbesondere etwa 3 mm, und eine Höhe von 2 bis 5 mm, insbesondere etwa 3 mm aufweisen.

4. Platte nach Anspruch 1, wobei beide Deckschichten aus den in Anspruch 1 genannten Deckschichtpartikeln erzeugt werden.

5. Platte nach einem der vorstehenden Ansprüche, **dadurch gekennzeichnet, dass** die Deckschichten und die mindestens eine Kernschicht mit einem mineralischen Bindemittel, insbesondere einem magnesithaltigen Bindemittel verklebt sind.

6. Platte nach einem der vorstehenden Ansprüche, **dadurch gekennzeichnet, dass** mindestens eine Deckschicht eine profilierte Oberfläche zur Außenseite der Platte hin aufweist, insbesondere mit einer Vielzahl an Vertiefungen oder Vorsprüngen.

7. Verfahren zur Herstellung einer Platte gemäß einem der vorstehenden Ansprüche, umfassend die folgenden Schritte:
a) Bereitstellen von Deckschichtpartikeln aus Typha-Blattmasse, wobei Deckschichtpartikel mit einer Länge von 3 - 15 cm, insbesondere 7 - 10 cm, und Querschnitten von 2x2 mm bis 6 × 8 mm, vorzugsweise 3 × 3 mm, eingesetzt werden;
b) Ausstreuen der die untere Deckschicht bildenden Deckschichtpartikel gemäß Schritt a);
c) optional Kämmen der gestreuten unteren Deckschicht, um die Deckschichtpartikel zumindest teilweise parallel auszurichten;
d) Aufstreuen der die mindestens eine Kernschicht bildenden Holzspäne und/oder Typha-Blattmaterialien;
e) Aufstreuen der die obere Deckschicht bildenden Deckschichtpartikel gemäß Schritt a);
f) optional Kämmen zur zumindest teilweise parallelen Ausrichtung der Deckschichtpartikel;
g) Verpressen der Deckschichten und mindestens eine Kernschicht mit Drücken von 0,5 - 5 N/mm², bevorzugt 1 - 2 N/mm².

8. Verfahren nach dem vorstehenden Anspruch, **dadurch gekennzeichnet, dass** die Deckschichten und die mindestens eine Kernschicht vor dem Ausstreuen mit einem mineralischen Bindemittel, insbesondere einem magnesithaltigen Bindemittel, versehen, insbesondere besprüht wurden.

9. Verfahren nach einem der vorstehenden Ansprüche, **dadurch gekennzeichnet, dass** mindestens eine Kernschicht aus Typha-Blattpartikeln besteht oder diese enthält, die in Richtung ihrer Blattachsen in dünne Scheiben von 1 - 5 mm, vorzugsweise 2 - 3 mm geschnitten wurden.

10. Verfahren nach einem der vorstehenden Ansprüche, **dadurch gekennzeichnet, dass** eine oder beide der Deckschichten in Stärken von 1 - 10 cm, insbesondere in Stärken von 3 - 5 cm gestreut werden.

11. Verfahren nach einem der vorstehenden Ansprüche, **dadurch gekennzeichnet, dass** die Kernschicht in einer Stärke von 1-8 cm, insbesondere 2-4 cm gestreut.

12. Verfahren nach einem der vorstehenden Ansprüche, **dadurch gekennzeichnet, dass** die mindestens eine Kernschicht aus Materialien besteht, deren Druckfestigkeit über 1 N/mm² liegt und optional das Kernschichtmaterial kein Raumgewicht von mehr als 500 kg/m³ in gepresstem Zustand aufweist.

13. Verfahren nach einem der vorstehenden Ansprüche, **dadurch gekennzeichnet, dass** eine kontinuierliche Anlage zur Herstellung der Platten verwendet wird und/oder die Platten unter Wasserdampfbeaufschlagung ausgehärtet werden.

14. Verfahren nach einem der vorstehenden Ansprüche, **dadurch gekennzeichnet, dass** die einzelnen Schichten parallel und unabhängig voneinander gestreut und dann miteinander in einer Presse verpresst werden.

15. Verfahren nach einem der vorstehenden Ansprüche, **dadurch gekennzeichnet, dass** mindestens eine Deckschicht bei der Herstellung mit einer profilierten Oberfläche zur Außenseite der Platte hin versehen wird, insbesondere durch die Verwendung einer profilierten Pressform, einschließlich einer Andrück-Rolle oder -Platte, oder einer Einlage zu einer Pressform.

## Claims

1. A board, in particularly OSB board, comprising two cover layers as well as at least one core layer lying in between, wherein one or both cover layers are formed from cover layer particles consisting of Typha leaf mass, and wherein cover layer particles with a length of 3 - 15 cm, in particularly 7-10 cm, and cross sections of 2 × 2 mm to 6 × 8 mm, preferably 3 × 3 mm, are used, and wherein the at least one core layer
i) consists of wood chips or contains them, or
ii) or consists of Typha leaf material or contains it, wherein the Typha leaf materials used consist of leaves or leaf bundles, which in the direction of the leaf axis are cut into slices of 1 - 5 mm, preferably 2 - 3 mm.

2. The board according to claim 1, **characterized in that** the cover layer particles have a length of 7 - 10 cm.

3. The board according to one of the preceding claims, **characterized in that** the cover layer particles have a cross section with a width of 2 to 4, in particularly about 3 mm, and a height of 2 to 5 mm, in particularly about 3 mm.

4. The board according to claim 1, wherein both cover layers are manufactured from the cover layer particles mentioned in claim 1.

5. The board according to one of the preceding claims, **characterized in that** the cover layers and the at least one core layer are stuck together with a mineral binder, in particularly a binder containing magnesite.

6. The board according to one of the preceding claims, **characterized in that** at least one cover layer comprises a profiled surface towards the outer side of the board, in particularly with a plurality of recesses or protrusions.

7. A method for the production of a board according to one of the preceding claims, comprising the following steps:
a) providing of cover layer particles made from Typha leaf mass, wherein cover layer particles with a length of 3 - 15 cm, in particularly 7-10 cm, and cross sections of 2 × 2 mm to 6 × 8 mm, preferably 3 × 3 mm, are used;
b) spreading of the cover layer particles according to step a) which form the lower cover layer;
c) optionally combing of the spread lower cover layer for aligning the cover layer particles at least partially parallel to each other;
d) sprinkling of the wood chips and/or Typha leaf materials which form the at least one core layer;
e) sprinkling of the cover layer particles according to step a) which form the upper cover layer;
f) optionally combing for aligning the cover layer particles at least partially parallel to each other;
g) compressing of the cover layers and at least one core layer with pressures of 0.5 - 5 N/mm², preferably 1 - 2 N/mm².

8. The method according to the preceding claim, **characterized in that** the cover layers and the at least one core layer prior to spreading were provided, in particularly sprayed with a mineral binder, in particularly a binder containing magnesite.

9. The method according to one of the preceding claims, **characterized in that** at least one core layer consists of Typha leaf particles or contains them, which in the direction of their leaf axis were cut into thin slices of 1 - 5 mm, preferably 2 - 3 mm.

10. The method according to one of the preceding claims, **characterized in that** one or both of the cover layers are spread in thicknesses of 1 - 10 cm, in particularly in thicknesses of 3 - 5 cm.

11. The method according to one of the preceding claims, **characterized in that** the core layer is spread in a thickness of 1-8 cm, in particularly 2-4 cm.

12. The method according to one of the preceding claims, **characterized in that** the at least one core layer consists of materials the compressive strength of which is higher than 1 N/mm², and optionally the core layer material does not have a volume weight which is higher than 500 kg/m³ in pressed state.

13. The method according to one of the preceding claims, **characterized in that** for the production of the boards a continuous plant is used and/or the boards are cured under application of water vapor.

14. The method according to one of the preceding claims, **characterized in that** the single layers are spread in a parallel manner and independently of each other and then in a press are compressed with each other.

15. The method according to one of the preceding claims, **characterized in that** at least one cover layer during the production is provided with a profiled surface towards the outer side of the board, in particularly by the use of a profiled press mold, including a pressing roller or plate, or an insert for a press mold.

## Revendications

1. Panneau, en particulier panneau OSB, comprenant deux couches de recouvrement ainsi qu'au moins une couche centrale située entre celles-ci, dans lequel une ou les deux couches de recouvrement sont formées de particules de couche de recouvrement qui se composent d'une matière à base de feuilles de typha, et dans lequel des particules de couche de recouvrement sont utilisées avec une longueur de 3 à 15 cm, en particulier de 7 à 10 cm, et des sections transversales de 2 × 2 mm à 6 × 8 mm, de préférence de 3 × 3 mm, et dans lequel l'au moins une couche centrale
i) se compose de copeaux de bois ou les contient, ou
ii) ou se compose d'une matière à base de feuilles de typha ou la contient, dans lequel les matières à base de feuilles de typha utilisées se composent de feuilles ou de liasses de feuille qui sont coupées en direction de l'axe de feuille en disques de 1 à 5 mm, de préférence de 2 à 3 mm.

2. Panneau selon la revendication 1, **caractérisé en ce que** les particules de couche de recouvrement présentent une longueur de 7 à 10 cm.

3. Panneau selon l'une quelconque des revendications précédentes, **caractérisé en ce que** les particules de couche de recouvrement présentent une section transversale avec une largeur de 2 à 4, en particulier d'environ 3 mm et une hauteur de 2 à 5 mm, en particulier d'environ 3 mm.

4. Panneau selon la revendication 1, **caractérisé en ce que** les deux couches de recouvrement sont générées à partir des particules de couche de recouvrement citées à la revendication 1.

5. Panneau selon l'une quelconque des revendications précédentes, **caractérisé en ce que** les couches de recouvrement et l'au moins une couche centrale sont collées avec un liant minéral, en particulier un liant contenant de la magnésite.

6. Panneau selon l'une quelconque des revendications précédentes, **caractérisé en ce qu'**au moins une couche de recouvrement présente une surface profilée vers le côté extérieur du panneau, en particulier avec une pluralité de cavités ou de saillies.

7. Procédé de fabrication d'un panneau selon l'une quelconque des revendications précédentes, comprenant les étapes suivantes :
a) la fourniture de particules de couche de recouvrement en une matière à base de feuilles de typha, dans lequel des particules de couche de recouvrement sont utilisées avec une longueur de 3 à 15 cm, en particulier de 7 à 10 cm, et des sections transversales de 2 × 2 mm à 6 × 8 mm, de préférence de 3 × 3 mm ;
b) l'épandage des particules de couche de recouvrement formant la couche de recouvrement inférieure selon l'étape a) ;
c) le peignage en option de la couche de recouvrement inférieure étalée afin d'orienter au moins partiellement parallèlement les particules de couche de recouvrement ;
d) l'épandage des copeaux de bois et/ou matières à base de feuilles de typha formant l'au moins une couche centrale ;
e) l'épandage des particules de couche de recouvrement formant la couche de recouvrement supérieure selon l'étape a) ;
f) le peignage en option pour l'orientation au moins partiellement parallèle des particules de couche de recouvrement ;
g) le pressage des couches de recouvrement et d'au moins une couche centrale avec des pressions de 0,5 à 5 N/mm², de préférence de 1 à 2 N/mm².

8. Procédé selon la revendication précédente, **caractérisé en ce que** les couches de recouvrement et l'au moins une couche centrale sont pourvues, en particulier vaporisées, avant l'épandage avec un liant minéral, en particulier un liant contenant de la magnésite.

9. Procédé selon l'une quelconque des revendications précédentes, **caractérisé en ce qu'**au moins une couche centrale se compose de particules de feuilles de typha ou les contient, lesquelles ont été coupées en direction de leurs axes de feuille en disques minces de 1 à 5 mm, de préférence de 2 à 3 mm.

10. Procédé selon l'une quelconque des revendications précédentes, **caractérisé en ce qu'**une ou les deux des couches de recouvrement sont étalées en épaisseurs de 1 à 10 cm, en particulier en épaisseurs de 3 à 5 cm.

11. Procédé selon l'une quelconque des revendications précédentes, **caractérisé en ce que** la couche centrale est étalée en une épaisseur de 1 à 8 cm, en particulier de 2 à 4 cm.

12. Procédé selon l'une quelconque des revendications précédentes, **caractérisé en ce que** l'au moins une couche centrale se compose de matériaux, dont la résistance à la pression est supérieure à 1 N/mm² et en option le matériau de couche centrale ne présente aucun poids spécifique de plus de 500 kg/m³ dans un état pressé.

13. Procédé selon l'une quelconque des revendications précédentes, **caractérisé en ce qu'**un appui continu est utilisé pour la fabrication des panneaux et/ou les panneaux sont durcis par alimentation en vapeur d'eau.

14. Procédé selon l'une quelconque des revendications précédentes, **caractérisé en ce que** les couches individuelles sont étalées parallèlement et indépendamment les unes des autres et sont ensuite pressées les unes avec les autres dans une presse.

15. Procédé selon l'une quelconque des revendications précédentes, **caractérisé en ce qu'**au moins une couche de recouvrement est pourvue lors de la fabrication d'une surface profilée vers le côté extérieur du panneau, en particulier par l'utilisation d'un moule de presse profilé, y compris un rouleau ou panneau de pressage, ou d'une couche intermédiaire dans un moule de presse.
